# EUROPEAN PATENT SPECIFICATION

(11) **EP 3 009 568 B1**
(45) Date of publication and mention of the grant of the patent: **19.07.2017**
(21) Application number: 14810617.2
(22) Date of filing: 14.05.2014
(51) Int. Cl.: E02D 5/30, E02D 5/34, E04C 5/06, B21F 27/12

(54) **ASYMMETRIC FRAME FOR RETAINING PILES AND MACHINE FOR THE PRODUCTION THEREOF**
ASYMMETRISCHER BEWEHRUNGSKORB ZUR BEWEHRUNG VON PFOSTEN UND MASCHINE FÜR DESSEN HERSTELLUNG
ARMATURE ASYMÉTRIQUE POUR POTEAUX DE SOUTÈNEMENT ET MACHINE POUR SA FABRICATION

(30) Priority: 13.06.2013 ES 201330883
(43) Date of publication of application: 20.04.2016
(73) Proprietor: Global Quality Steel, S.A., 6915 Pambio-Noranco (CH)
(72) Inventor: CALLEJA FÉNIZ, Tomás, 28816 Camarma de Esteruelas (Madrid) (ES); HERNÁNDEZ MONTES, Enrique, 28816 Camarma de Esteruelas (Madrid) (ES)
(74) Representative: Capitán García, Maria Nuria
(86) International application number: PCT/ES2014/070401
(87) International publication number: WO 2014/198978

(56) References cited:
- EP-A2- 0 196 542
- EP-A2- 0 955 423
- WO-A1-2009/013774
- DE-A1- 2 614 026
- DE-A1- 2 614 026
- DE-A1- 3 500 008
- DE-A1- 3 500 008
- ES-A1- 2 344 050
- US-A- 1 653 055
- US-A- 2 091 540
- US-A- 4 467 583
- US-A- 4 842 447
- US-A- 5 665 254
- US-A- 5 761 875

## Description

### OBJECT OF THE INVENTION

The present invention relates to an asymmetric frame for retaining piles used in the construction of containment walls.

### BACKGROUND OF THE INVENTION

Pile frames consisting of a plurality of longitudinal reinforcement bars, extending from end to end of the pile, made of steel with a constant diameter and placed in the cage with a constant separation to each other, and transverse reinforcement means attached to said longitudinal reinforcement bars, consisting in a plurality of ring-shaped bars, circular bands, arranged equidistantly to each other along the entire length of the pile; additional reinforcement means used consist in a bar arranged spirally on the longitudinal reinforcement bars.

An asymmetric frame according to the preamble of claim 1 is described in DE 35 00 008 A1.

Also known are asymmetric frames for piles, such as that of document ES 2344050, published on 12 January 2012, which comprises toroidal or helical elements inside which are attached, perpendicularly to said elements, a series of bars parallel to each other with different diameters, with a non-constant separation between said bars.

This solution of document ES 2344050 allows reducing the amount of material used to manufacture the frame, maintaining or improving the shearing strength characteristics of the pile. However, due to the difference in diameter of the longitudinal bars, during the transport, storage, usually horizontal stacking, lifting and assembly for installation the frame can be deformed by crushing in the area of the longitudinal bars with a smaller diameter.

That is, during the handling, storage, lifting and assembly, the distribution of the weight of the cage and the strength of the bars are asymmetrical, such that the helix or spiral will support a greater weight where the bars have a greater diameter and the frame will be weaker where the bars have a smaller diameter. This means that the frame can be crushed in any of the aforementioned processes. In addition, due to the combination of longitudinal bars with different diameters, the inside of the frame will not form a circumference but instead will have an irregular shape, further complicating the solutions related to reinforcements inside the frame.

On another hand, document EP 0035477, published on 9 September 1981, discloses a machine for manufacturing a pile frame comprising headers that house and support the ends of a plurality of longitudinal reinforcement bars, a device for arranging a transverse reinforcement bar and welding means for welding the longitudinal reinforcement bars and the transverse reinforcement bar arranged spirally on said longitudinal reinforcement bars.

The solution proposed by document EP 0035477 has the drawback that the transverse reinforcement bar winds in the longitudinal reinforcement bars as the structure formed by the headers that house and support said longitudinal bars rotates. That is, the extraction of the spiral bar from the drum in which it is wound is performed by traction when turning the longitudinal bars.

That is, during the automated machine manufacture, it is the longitudinal bars arranged in machine headers which, by attachment to the transverse bar and rotation and displacement, exert the force required to pull the transverse bar wound on a rotating drum. The greater the diameter of the transverse bar the greater the tension transmitted to the longitudinal bars in the process of extracting and pulling the transverse bar.

In the cited asymmetric cages said pulling crushes the structure at the area where the bars have a smaller diameter, making it impossible to industrialise the manufacture of said cages using the cited machine.

For this reason, it is necessary to design a cage which, even when it includes longitudinal reinforcement bars with different diameters, is not deformed by crushing during transportation, storage, lifting or assembly, or during the production thereof.

### DESCRIPTION OF THE INVENTION

In view of the above, the present invention relates to an asymmetric frame for retaining piles according to the subject-matter of claim 1. The subject matter of the invention is an asymmetrical frame that resists the loads to which such frames are subjected before they are placed in their final arrangement to be encased in concrete or the like. Due to its asymmetrical nature, the frame is weaker where the bars with a smaller diameter are located.

This weakness means that the frame can be crushed during handling, storage, lifting and assembly, as well as during the production thereof. The technical problem to solve is to provide in said frame elements that supply the required resistance to prevent crushing.

The asymmetrical frame for retaining piles comprises a plurality of longitudinal bars placed parallel to each other, the ends of which are arranged to form a circumference, and transverse reinforcement means externally surrounding the longitudinal bars in several turns, such that said bars and said means form a cylindrical volume.

At least two longitudinal bars are attached to the transverse reinforcement means and first reinforcement means are attached to at least two longitudinal bars.

The frame is characterised in that at least two longitudinal bars have different diameters and in that the first internal reinforcement means are two partial rings joined at their ends by attachment means , wherein ends overlap and are attached to each other by attachment means consisting of a welding cord or segment of wire. When at least two longitudinal bars have different diameters, the frame is referred to as asymmetric. This is a term used in the field that refers to lack of symmetry in any diametrical axis of the frame cross section, that is, any diametrical plane of the frame. That is, even if the bars are symmetrical about an axis or plane, if this is not the case for another the frame is referred to as asymmetric. Specifically, if there is symmetry with respect to a single specific axis or plane, the term used in the field is bisymmetry. A machine for assembling the aforementioned asymmetric frame comprises headers that house and support the ends of a plurality of longitudinal bars, a device for depositing the transverse reinforcement means and welding means for welding the longitudinal bars and the transverse reinforcement bar deposited on said bars. A machine also comprises a drum about which the transverse reinforcement bar is wound, and extraction means for the transverse reinforcement bar that apply the pulling force on the same, thereby preventing said force from being applied on the longitudinal bars with the resulting deformation thereof.

In this way, an asymmetric frame is obtained that solves the problem addressed with the advantage of maintaining the desired asymmetrical configuration while preserving the resistance of conventional symmetric frames, during handling, storage -generally by horizontal stacking-, lifting and assembly, as well as during the production thereof.

### DESCRIPTION OF THE DRAWINGS

This specification is supplemented with a set of drawings illustrating the preferred embodiment, which are never intended to limit the invention. The Figures 1, 3-5, 7, 8, 11-13 and 15 do not fall under the scope of the claims and therefore are not part of the invention.
Figure 1 shows a cross section of a frame where the longitudinal bars are arranged on one layer and the first internal reinforcement means are a tiered ring.
Figure 2 shows a cross section of the frame where the longitudinal bars are arranged on one layer and the first internal reinforcement means are two partial rings joined by welding.
Figure 3 shows a cross section of a frame where the longitudinal bars are arranged on one layer, where longitudinal bars of different diameters are joined to each other and the first internal reinforcement means are a ring.
Figure 4 shows a cross section of a frame where the longitudinal bars are arranged on one layer and the first internal reinforcement means are an eccentric ring.
Figure 5 shows a cross section of a frame where the longitudinal bars are arranged on two superposed layers, where longitudinal bars of different diameters are joined to each other and the first internal reinforcement means are a ring.
Figure 6 shows a cross section of the frame where the longitudinal bars are arranged on two superposed layers, where longitudinal bars of different diameters are joined to each other and the first internal reinforcement means are two partial rings joined by welding.
Figure 7 shows a cross section of a frame where the longitudinal bars are arranged on two superposed layers, where longitudinal bars of different diameters are joined to each other and the first internal reinforcement means are an eccentric ring.
Figure 8 shows a cross section of a frame where the longitudinal bars are arranged on two layers, separated by the first internal reinforcement means, which are a ring.
Figure 9 shows a cross section of the frame where the longitudinal bars are arranged on two layers, separated by the first internal reinforcement means, which are two partial rings joined by welding.
Figure 10 shows a cross section of the frame symmetrical with respect to figure 9, the cross section of figure 9 corresponding to one length of the frame while that of figure 10 corresponds to another length of the frame, such that there is longitudinal asymmetry.
Figure 11 shows a cross section of a frame where the longitudinal bars are arranged on two layers, separated by the first internal reinforcement means, which are an eccentric ring.
Figure 12 shows a cross section of a frame where the longitudinal bars are arranged in two layers, separated from the first internal reinforcement means which are a ring, and internally to the second layer of longitudinal bars are second internal reinforcement means which are also a ring.
Figure 13 shows a cross section of a frame where the longitudinal bars are arranged in two layers, separated from the first internal reinforcement means which are a ring, and internally to the second layer of longitudinal bars are arranged second internal reinforcement means which are two partial rings joined by welding.
Figure 14 shows a cross section of the frame where the longitudinal bars are arranged in two layers, separated from the first internal reinforcement means which are two partial rings joined by wire, and internally to the second layer of longitudinal bars are arranged second internal reinforcement means which are a ring.
Figure 15 shows a cross section of a frame where the longitudinal bars are arranged in two layers, separated from the first internal reinforcement means which are a ring, and internally to the second layer of longitudinal bars are arranged second internal reinforcement means which are an eccentric ring.
Figure 16 shows an enlarged view of a z-shaped segment located inside the frame.
Figure 17 shows a frame with a head on one of the ends thereof, where the transverse reinforcement means are circular bands.
Figure 18 shows a frame with a head on one of the ends thereof, where the transverse reinforcement means are a spiral bar.
Figure 19 shows a perspective view of a machine where the extraction means are rollers in the deposition device.
Figure 20 shows a perspective view of a machine where the extraction means are a motor in the drum.

### PREFERRED EMBODIMENT OF THE INVENTION

In view of the above, the present invention relates to an asymmetric frame for retaining piles.

The asymmetric frame for retaining piles comprises a plurality of longitudinal bars (1) arranged parallel to each other, the ends of which are arranged to form a circumference, and transverse reinforcement means (2) externally surrounding said longitudinal bars (1) in several turns, such that said bars (1) and said means (2) form a cylindrical volume (3). At least two longitudinal bars (1) have different diameters and at least two longitudinal bars (1) with the same or different diameters are attached to the transverse reinforcement means (2).

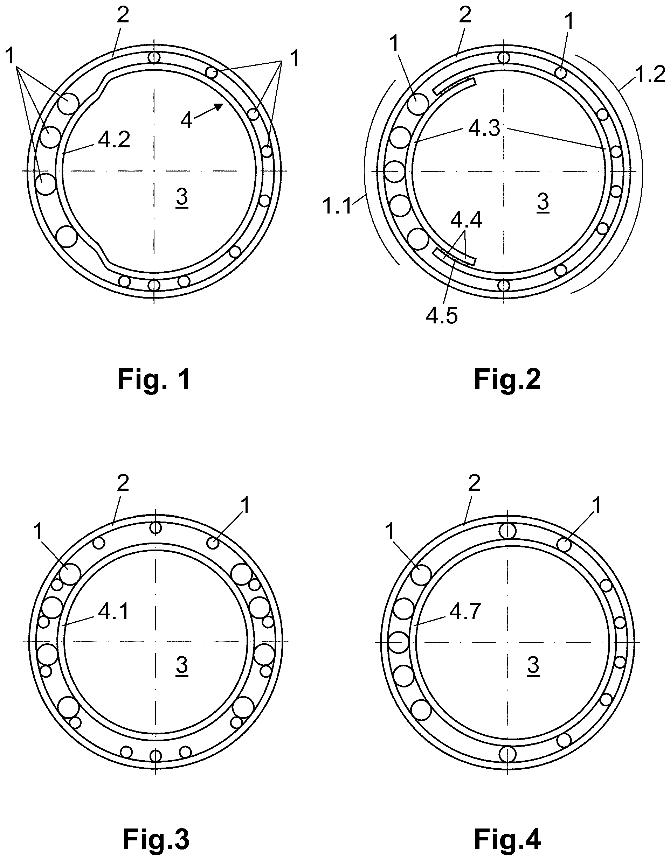

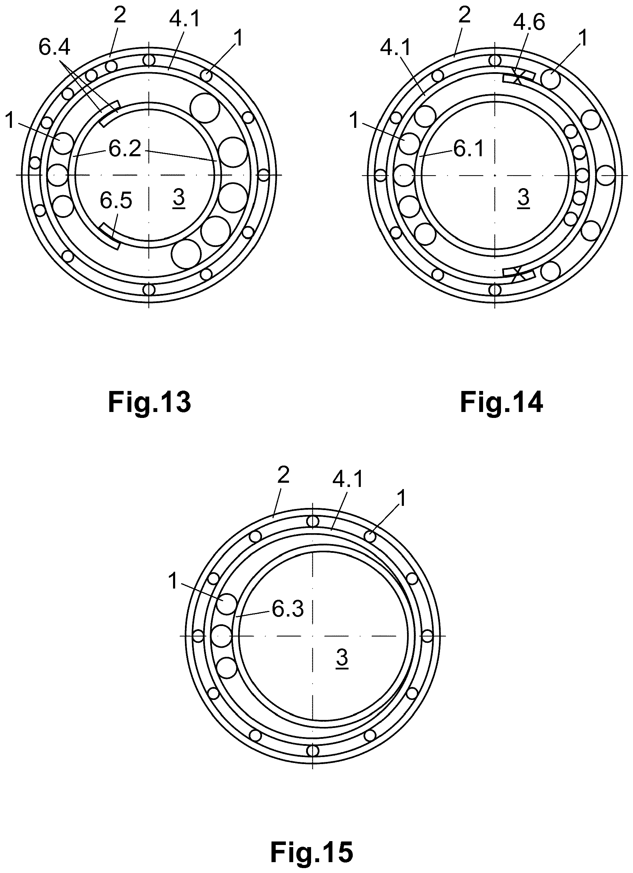

When at least two longitudinal bars (1) have different diameters the frame has an asymmetric structure, as the strength diagram is not symmetrical since the loads that can be withstood depend on which section of the frame is acted upon. All the figures show asymmetric frames; specifically, figures 2 to 12 and 14 to 15 show bisymmetric frames.

The distance between the longitudinal bars (1) can be the same, that is, they are arranged equidistantly, or can change, or the frame can include combinations of equidistant bars and bars with different separations from each other. For example, as shown in figure 1 the three bottom bars are equidistant while the rest are at different distances from each other, and in figure 2 the five bars on the left are equidistant and the eight bars on the right are not.

The frame also comprises first internal reinforcement means (4) attached internally to the longitudinal bars (1). In addition, the frame can also comprise at least one head (5) such that between two adjacent turns of the transverse reinforcement means (2) there is a shorter distance in at least one segment of the frame than in the rest of the frame.

In some cases the first internal reinforcement means (4) are sufficient to strengthen the frame. However, in other cases it may be necessary to combine the first internal reinforcement means (4) and the head (5) to obtain the required frame strength for the diameters of the bars (1) used.

The head (5) is a segment with turns that have the same effect as the first internal reinforcement means (4), since the distance between the turns is less than in the transverse reinforcement means (2) such that in this segment the strength is greater than in the rest of the frame.

For sake of simplicity, figures 1 to 15 represent sectional views of several frame embodiments, all of which can include one or several heads (5) along the length of the frame.

Optionally, the longitudinal bars (1) are arranged in one layer on the inside of the transverse reinforcement means (2), as shown in figures 1 to 4. The term "layer" refers to an arrangement where only some longitudinal bars (1) are in contact with the transverse reinforcement means (2) in one cross section of the frame.

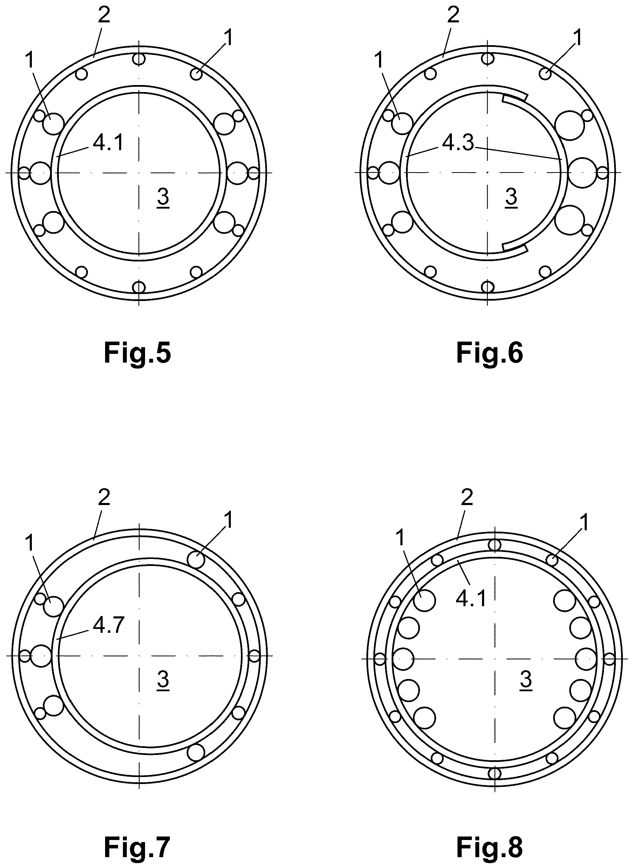

In another option, shown in figures 5 to 7, the longitudinal bars (1) are arranged in two layers, one on top of the other, such that some longitudinal bars (1) are in contact with the transverse reinforcement means (2) while others are not. Some of the longitudinal bars (1) are attached to the first internal reinforcement means (4).

The term "layer" can also be interpreted as the arrangement of longitudinal bars (1) the centre of which follows approximately the circumference, any variation being smaller than the radius of the smallest bar. This can be seen clearly in figure 3, where two bars of different size are joined and because of said size difference the centres thereof follow circumferences with a different radius; however, the difference is smaller than the radius of the smaller bar, since when this difference is equal to said radius the bars will be superposed, as shown in figure 5.

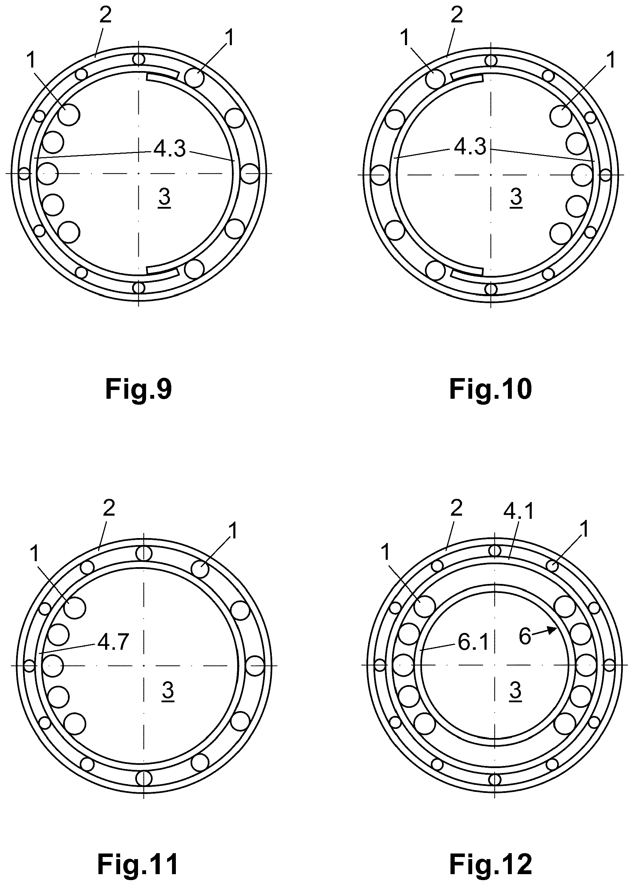

In addition to the arrangement of the longitudinal bars (1) in a layer, longitudinal bars (1) can be placed internally to the first reinforcement means (4) in another layer, as shown in figures 8 to 11. Optionally to this arrangement, second reinforcement means (6) can be added internal to the second layer of longitudinal bars (1), as shown in figures 12 to 15. In other words, the longitudinal bars (1) can be arranged in two layers, separated by the first internal reinforcement means (4).

Optionally, in any of the aforementioned embodiments the first and second internal reinforcement means (4, 6) are a band, which is circular in the figures but can have a different shape according to the frame: square, pentagonal, etc., either continuous (4.1, 6.1) as in figures 3 to 5, 7 to 8, 12, 14 and 15, or tiered (4.2) as in figure 1. However, sometimes said band cannot be shaped to obtain a perfect adaptation to the longitudinal bars (1). For this reason the first and second internal reinforcement means (4, 6) are embodied as two internal reinforcement partial bands (4.3, 6.2) that are joined at the ends (4.4, 6.4) thereof with attachment means (4.5, 6.5), as can be seen in figures 2, 6, 9, 10, 13 and 14.

Said ends (4.4, 6.4) can be joined in any manner, although the form in which the ends (4.4, 6.4) overlap and are attached to each other by attachment means (4.5, 6.5) consisting of a welding cord or segment of wire (4.6) has been shown to be advantageous.

The first and second reinforcement means (4, 6) can be arranged coaxially, as in figures 1 to 3, 5 to 6, 8 to 10, 12 to 14, while some of said means can be arranged eccentrically (4.7, 6.3) with respect to the others, as in figures 4, 7, 11 and 15.

As stated above, the option of including one or more heads (5) in any position of the frame is not limited by any embodiment and is useful both where there is one layer of longitudinal bars (1) and when there are two layers, as well as when there are first internal reinforcement means (4) and second internal reinforcement means (6), and any combination thereof. The head (5) is a way to reinforce the structure of the frame when the bars are not sufficient and there is a risk of crushing at the weakest sections.

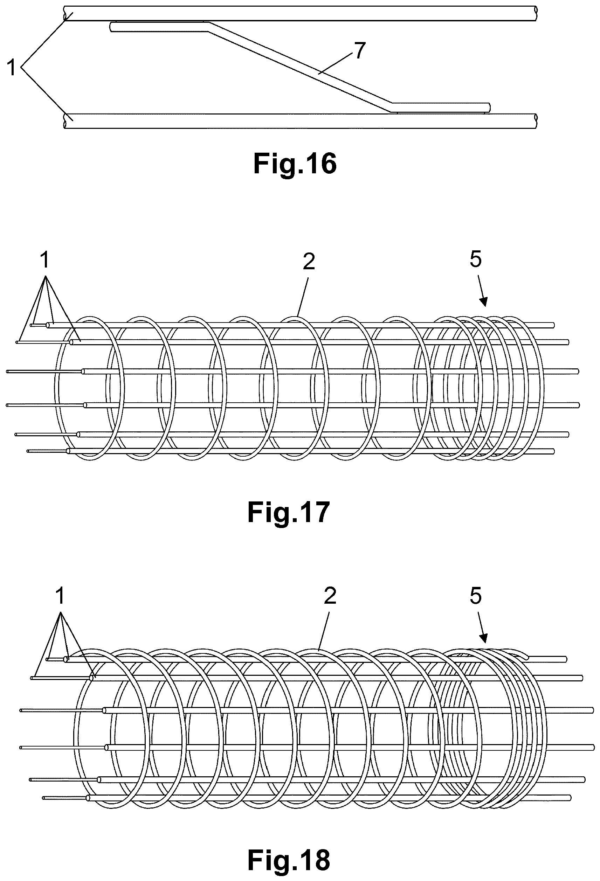

The transverse reinforcement means (2) and the head (5) are at the same time and for a given frame, bands or a spiral bar. Figure 17 shows an embodiment in which bands are used, and figure 18 shows the same embodiment in which a spiral bar is used. The continuous bands shown in figure 17 are circular bars joined flush at the ends thereof, but it is more common for the ends to overlap as described for the first and second internal reinforcement means (4, 6).

Until now the asymmetry of the arrangement of the longitudinal bars (1) in a section of the frame has been discussed. However, there is another asymmetry known as longitudinal asymmetry in which at least one longitudinal bar (1) is shorter than the full length of the frame. A specific and common case is when some bars (1) reach from one end of the frame to a certain length of the frame, and after this length there are other different bars (1). This is akin to having a certain cylindrical volume (3) in one segment of the frame and a different such volume in another segment, as there are different longitudinal bars (1).

In addition as a reinforcement option it is possible to place between the longitudinal bars (1) z-shaped segments (7) as shown in figure 16. Said z-shaped segments are generally placed inside the frame and each end is attached to a different longitudinal bar (1), such as by welding, and sometimes to diametrically opposite bars, said end also resting on the transverse reinforcement bar (2).

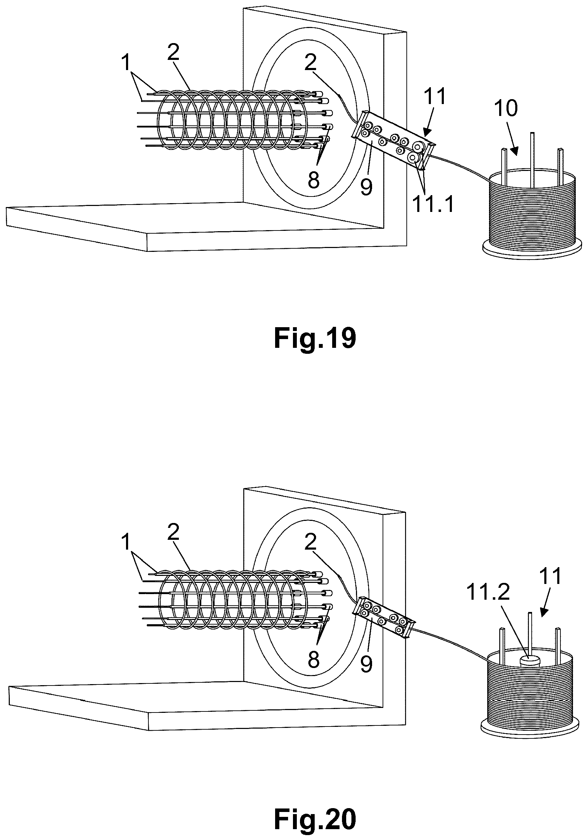

As shown in figures 19 and 20, the machine for assembling an asymmetric frame as described comprises headers (8) that house and support the ends of a plurality of longitudinal bars (1), a device (9) for depositing the transverse reinforcement means (2) and welding means, not shown in the figures, for welding the longitudinal bars (1) and the transverse reinforcement means (2) deposited on said bars (1).

The machine also comprises a drum (10) about which the transverse reinforcement means (2) are wound, and extraction means (11) for the transverse reinforcement means (2) that apply the pulling force on the same, thereby preventing said force from being applied on the longitudinal bars (1) with the resulting deformation thereof.

One option is that the extraction means (11) are rollers (11.1) arranged in the depositing device (9) driven by a motor, not shown in the figures, of any known type such as electric or hydraulic, while another option is that the extraction means (11) are a motor (11.2) placed in the drum (10), generally an electric motor.

The transverse reinforcement means (2) and the head (5) are normally a bar either arranged in bands, as in figure 17, or in a spiral, as in figures 18 to 20. Since said means (2) in the form of a bar are extracted from the drum (10), they are cut by cutting means to form the bands or spiral, for example. The cutting means are not shown in the figures as these can be an instrument of the machine or a tool generally operated by a worker.

Some examples of embodiments of the asymmetric frame are described below.

### Example 1

Frame 2 metres in diameter and 12 metres in length in which the transverse reinforcement means (2) are a spiral bar (2) with a 16 mm diameter and the diameter of the longitudinal bars (1) is 32 mm in a first group (1.1) of 20 bars occupying 1/3 of the section and 16 mm in a second group (1.2) of 26 bars occupying 2/3 of the section. The longitudinal bars (1) are arranged in a machine with 72 headers (8).

The frame is stiffened by fitting heads (5) with three turns every 1.5 metres. This is due to the fact that the spiral (2) has a sufficiently large diameter with respect to the weight of the frame and the geometry thereof.

Another stiffening option consists in heads (5) with three turns every 3 metres and partial internal reinforcement rings (4.3) every 3 metres.

### Example 2

Frame 1.4 metres in diameter and 12 metres in length in which the transverse reinforcement means (2) are a spiral bar with a 12 mm diameter and the diameter of the longitudinal bars (1) is 32 mm in a first group (1.1) of 28 bars occupying 1/2 of the section, and 12 mm in a second group (1.2) of 17 bars occupying the gaps between the bars (1) of the first group (1.1), such that 8 bars (1) are left on one side and another 9 bars (1) of 12 mm on the other side. The longitudinal bars (1) are arranged in a machine with 48 headers (8).

This frame is stiffened by placing heads (5) with three turns every 3 metres having an inner reinforcement ring (4.1) that only touches the longitudinal bars (1) of 32 mm.

### Example 3

Frame 0.8 metres in diameter and 12 metres in length in which the transverse reinforcement means (2) are a spiral bar (2) with a 10 mm diameter and the diameter of the longitudinal bars (1) is 32 mm in a first group (1.1) of 5 bars occupying 1/3 of the section in a first layer and a second layer with another 5 bars, and 12 mm in a second group (1.2) of 11 bars occupying 2/3 of the section. The longitudinal bars (1) are arranged in a machine with 16 headers (8).

This frame is stiffened by first internal reinforcement means (4) in a ring form every 2.5 metres as required to join the second layer of 32 mm that will be welded to said first means. The rings can have consist of single tiered piece (4.2) or joined partial pieces (4.3). These joined partial rings (4.3) have a better stiffening performance as they touch all the longitudinal bars (1). In the case of the ring consisting in a single piece (4.2), spiral bar heads (5) are required every 3 metres, compared to every 2 metres for partial rings (4.3).

## Claims

1. Asymmetric frame for retaining piles comprising a plurality of longitudinal bars (1) arranged parallel to each other, the ends of which are arranged to form a circumference, and transverse reinforcement means (2) externally surrounding said longitudinal bars (1) in several turns, such that said bars (1) and said means (2) form a cylindrical volume (3), where at least two longitudinal bars (1) are attached to the transverse reinforcement means (2), first internal reinforcement means (4) attached to at least two longitudinal bars (1), **characterized in that** at least two longitudinal bars (1) have different diameters and **in that** the first internal reinforcement means (4) are two partial rings (4.3) joined at their ends (4.4) by attachment means (4.5), wherein ends (4.4) overlap and are attached to each other by attachment means (4.5) consisting of a welding cord or segment of wire.

2. Asymmetric frame according to claim 1 that also comprises at least one head (5) such that between two adjacent turns of the transverse reinforcement means (2) there is a shorter distance in at least one segment of the frame than in the rest of the frame.

3. Asymmetric frame according to claims 1 or 2
wherein the longitudinal bars (1) are arranged in one layer on the inside of the transverse reinforcement means (2).

4. Asymmetric frame according to claims 1 or 2,
wherein the longitudinal bars (1) are arranged in two layers, one layer superposed on the other.

5. Asymmetric frame according to claim 3 wherein longitudinal bars (1) are arranged in a layer internally to the first internal reinforcement means (4).

6. Asymmetric frame according to claim 5 wherein second reinforcement means (6) are arranged internally to the longitudinal bars (1) in a layer that is in turn internal to the first reinforcement means (4).

7. Asymmetric frame according to claim 6, wherein said second internal reinforcement means (6) are a ring (6.1).

8. Asymmetric frame according to claim 6 wherein the second internal reinforcement means (6) are two partial rings (6.2) joined at their ends (6.4) by attachment means (6.5).

9. Asymmetric frame according to claim 8 wherein the ends (6.4) overlap and are attached to each other by attachment means (6.5) consisting of a welding cord or segment of wire.

10. Asymmetric frame according to claims 2 to 9
wherein the transverse reinforcement means (2) and the head (5) are, at the same time and for a given frame, bands or a spiral bar.

11. Asymmetric frame according to the any of the preceding claims wherein at least one longitudinal bar (1) is shorter than the total length of the frame.

12. Asymmetric frame according to any of the preceding claims wherein between the longitudinal bars (1) it is possible to place z-shaped segments (7).

## Patentansprüche

1. Asymmetrischer Rahmen zum Halten von Pfählen, umfassend eine Vielzahl von längs verlaufenden Stäben (1), die parallel zu einander angeordnet sind, deren Enden angeordnet sind, um einen Kreisumfang zu bilden, und quer verlaufende Verstärkungsmittel (2), die die längs verlaufenden Stäbe (1) in mehreren Windungen von außen umgeben, so dass die Stäbe (1) und die Mittel (2) ein zylindrisches Volumen (3) bilden, wobei zumindest zwei längs verlaufende Stäbe (1) an den quer verlaufenden Verstärkungsmitteln (2) angebracht sind, wobei das erste innere Verstärkungsmittel (4) an zumindest zwei längs verlaufenden Stäben (1) angebracht ist, **dadurch gekennzeichnet, dass** zumindest zwei längs verlaufende Stäbe (1) unterschiedliche Durchmesser aufweisen und dass das erste innere Verstärkungsmittel (4) aus zwei Teilringen (4.3) besteht, die an ihren Enden (4.4) über Befestigungsmittel (4.5) miteinander verbunden sind, wobei sich die Enden (4.4) überlagern und über Befestigungsmittel (4.5), die aus einem Schweißband oder einem Drahtstück bestehen, miteinander verbunden sind.

2. Asymmetrischer Rahmen nach Anspruch 1, der auch zumindest ein Kopfteil (5) umfasst, so dass zwischen zwei benachbarten Windungen der quer verlaufenden Verstärkungsmittel (2) ein kleinerer Abstand in zumindest einem Abschnitt des Rahmens besteht als im restlichen Rahmen.

3. Asymmetrischer Rahmen nach Anspruch 1 oder 2, wobei die längs verlaufenden Stäbe (1) in einer Schicht im Inneren der quer verlaufenden Verstärkungsmittel (2) angeordnet sind.

4. Asymmetrischer Rahmen nach Anspruch 1 oder 2, wobei die längs verlaufenden Stäbe (1) in zwei Schichten angeordnet sind, wobei eine Schicht über der anderen angeordnet ist.

5. Asymmetrischer Rahmen nach Anspruch 3, wobei die längs verlaufenden Stäbe (1) in einer Schicht im Inneren des ersten inneren Verstärkungsmittels (4) angeordnet sind.

6. Asymmetrischer Rahmen nach Anspruch 5, wobei das zweite Verstärkungsmittel (6) im Inneren der längs verlaufenden Stäbe (1) in einer Schicht angeordnet ist, die wiederum im Inneren des ersten Verstärkungsmittels (4) angeordnet ist.

7. Asymmetrischer Rahmen nach Anspruch 6, wobei das zweite innere Verstärkungsmittel (6) ein Ring (6.1) ist.

8. Asymmetrischer Rahmen nach Anspruch 6, wobei das zweite innere Verstärkungsmittel (6) aus zwei Teilringen (6.2) besteht, die über Befestigungsmittel (6.5) an ihren Enden (6.4) verbunden sind.

9. Asymmetrischer Rahmen nach Anspruch 8, wobei sich die Enden (6.4) überlagern und durch Befestigungsmittel (6.5), die aus einem Schweißband oder einem Drahtstück bestehen, aneinander befestigt sind.

10. Asymmetrischer Rahmen nach Anspruch 2 bis 9, wobei die quer verlaufenden Verstärkungsmittel (2) und das Kopfstück (5) gleichzeitig und für einen gegebenen Rahmen Bänder oder ein Spiralstab sind.

11. Asymmetrischer Rahmen nach einem der vorangegangenen Ansprüche, wobei zumindest ein längs verlaufender Stab (1) kürzer ist als die Gesamtlänge des Rahmens.

12. Asymmetrischer Rahmen nach einem der vorangegangenen Ansprüche, wobei es möglich ist, zwischen den längs verlaufenden Stäben (1) z-förmige Segmente (7) zu platzieren.

## Revendications

1. Cadre asymétrique destiné à retenir des piles comprenant une pluralité de barres longitudinales (1) disposées parallèles les unes aux autres, dont les extrémités sont disposées pour former une circonférence et des moyens de renfort transversaux (2) entourant en externe lesdites barres longitudinales (1) sur plusieurs tours, de sorte que lesdites barres (1) et lesdits moyens (2) forment un volume cylindrique (3), au moins deux barres longitudinales (1) étant fixées aux moyens de renfort transversaux (2), des premiers moyens de renfort internes (4) fixés aux au moins deux barres longitudinales (1), **caractérisé en ce qu'**au moins deux barres longitudinales (1) ont des diamètres différents et **en ce que** les premiers moyens de renfort internes (4) sont deux anneaux partiels (4.3) reliés au niveau de leurs extrémités (4.4) par des moyens de fixation (4.5), dans lequel les extrémités (4.4) se chevauchent et sont fixées les unes aux autres par des moyens de fixation (4.5) constitués d'un cordon de soudure ou d'un segment de fil.

2. Cadre asymétrique selon la revendication 1, qui comprend également au moins une tête (5) de sorte que, entre deux tours adjacents des moyens de renfort transversaux (2), se trouve une distance plus courte dans au moins un segment du cadre que dans le reste du cadre.

3. Cadre asymétrique selon les revendications 1 ou 2, dans lequel les barres longitudinales (1) sont disposées en une couche sur l'intérieur des moyens de renfort transversaux (2).

4. Cadre asymétrique selon les revendications 1 ou 2, dans lequel les barres longitudinales (1) sont disposées en deux couches, une couche superposée sur l'autre.

5. Cadre asymétrique selon la revendication 3, dans lequel les barres longitudinales (1) sont disposées en une couche de façon interne par rapport aux premiers moyens de renfort internes (4).

6. Cadre asymétrique selon la revendication 5, dans lequel des seconds moyens de renfort (6) sont disposés de façon interne par rapport aux barres longitudinales (1) en une couche qui est à son tour interne par rapport aux premiers moyens de renfort (4).

7. Cadre asymétrique selon la revendication 6, dans lequel lesdits seconds moyens de renfort internes (6) sont un anneau (6.1).

8. Cadre asymétrique selon la revendication 6, dans lequel les seconds moyens de renfort internes (6) sont deux anneaux partiels (6.2) reliés au niveau de leurs extrémités (6.4) par des moyens de fixation (6.5).

9. Cadre asymétrique selon la revendication 8, dans lequel les extrémités (6.4) se chevauchent et sont fixées les unes aux autres par des moyens de fixation (6.5) constitués d'un cordon de soudure ou d'un segment de fil.

10. Cadre asymétrique selon les revendications 2 à 9, dans lequel les moyens de renfort transversaux (2) et la tête (5) sont, en même temps et pour un cadre donné, des bandes ou une barre en spirale.

11. Cadre asymétrique selon l'une quelconque des revendications précédentes, dans lequel au moins une barre longitudinale (1) est plus courte que la longueur totale du cadre.

12. Cadre asymétrique selon l'une quelconque des revendications précédentes, dans lequel, entre les barres longitudinales (1), il est possible de placer des segments en forme de z (7).
